# EUROPEAN PATENT SPECIFICATION

(11) **EP 4 032 807 B1**
(45) Date of publication and mention of the grant of the patent: **26.02.2025**
(21) Application number: 21173058.5
(22) Date of filing: 10.05.2021
(51) Int. Cl.: B64C 23/06, B64D 27/31

(54) **AIRCRAFT HAVING RETRACTABLE VORTEX GENERATORS**
FLUGZEUG MIT EINZIEHBAREN WIRBELGENERATOREN
AÉRONEF DOTÉ DE GÉNÉRATEURS DE VORTEX ESCAMOTABLE

(30) Priority: 22.01.2021 EP 21153046
(43) Date of publication of application: 27.07.2022
(73) Proprietor: Blue Spirit Aero SAS, 92500 Rueil-Malmaison (FR)
(72) Inventor: Vincekovic, David, Woodville, SA 5011 (AU); Pasquiet, Florian, 30650 Rochefort du Gard (FR); Savin, Olivier, 92500 Rueil-Malmaison (FR)
(74) Representative: Schulze, Mark

(56) References cited:
- DE-A1- 102015 120 958
- US-A- 3 960 345
- US-A1- 2007 018 056
- US-A1- 2010 038 492
- US-A1- 2020 391 854
- US-B1- 10 137 979
- US-B2- 6 837 465
- US-B2- 7 878 457

## Description

The invention relates to a fixed-wing aircraft that comprises at least one vortex generator movable through an outer surface of the aircraft between a retracted state and a fully extended state and an electronic control unit adapted to control actuation of the at least one vortex generator. The invention also relates to a method for operating a fixed-wing aircraft comprising at least one vortex generator movable between a retracted state and a fully extended state. The invention is particularly useful for fixed-wing propeller aircraft, in particular aircraft comprising at least three propeller propulsion units per wing, in particular having electric propulsion units.

EP 1 896 323 B1 and US 2007/018056 A1 disclose a flow control device comprising: a flow control surface over which fluid is designed to flow in a predetermined direction; vortex generators associated with the flow control surface, each respective vortex generator having a pivot axis that forms an acute angle with respect to the predetermined direction and capable of being positioned in both of an extended state, in which the respective vortex generators function to create a swirling fluid flow, and a retracted state, in which the respective vortex generators are pivoted via the pivot axis so as to lie on top of and in a parallel direction to the overlying flow control surface, and an actuator associated with each of the respective vortex generators, each actuator adapted to state the associated vortex generator between the extended and retracted states.

US 3,263,945 discloses an aircraft wing comprising a main section and a drooping nose section having a pivotal mounting on the main section, said main section and nose section having respective upper surfaces which possess a substantially continuous common chord line when said sections are in a first positional relationship, said nose section pivoting on said pivotal mounting relative to said main section to a second positional relationship in which said upper surfaces are separated by a gap, at least one sealing plate pivotally mounted on said main section and lying in a retracted state wholly inward of said upper surfaces when said main and nose sections are in said first positional relationship, means moving said sealing plate into said gap to close it when said main and nose sections are brought into said second positional relationship, and a series of blades upstanding on said sealing plate and constituting vortex generators, said blades lying retracted wholly inward of said upper surfaces of said main and nose sections when said sections are in said first positional relationship, and projecting out above said upper surfaces when said sections are in said second positional relationship and the sealing plate is in the gap.

US 4,039,161 discloses vortex generators connected to a control surface in front of the hinge line of the control surface so that when the control surface is deflected, the vortex generators project into the airstream on the opposite side from the deflecting control surface. The action of the vortex generators causes the airflow to remain attached to the control surface at higher angles of attack than would otherwise be possible thus increasing the lift of the air foil and control surface.

US 5,253,828 discloses a concealable flap actuated vortex generator for generating a vortex on a lifting surface assembly, and an improved aircraft flight-lifting surface having such concealable flap actuated vortex generators. When the flap of the lifting surface assembly is in the nominal (non-extended or non-deflected) state, the vortex generator is unexposed. When the flap is actuated by a flap actuator, the flap is extended or deflected from the nominal state, thereby projecting or exposing the vortex generator into an operational state and enabling the generation of a vortex.

US 8,657,238 B2 discloses a device and methods for low-speed performance improvement of a lifting surface assembly are disclosed. At least one vortex generator is coupled to the lifting surface assembly, and the vortex generator is extended through the lifting surface assembly by drooping a hinged leading coupled to the lifting surface assembly to increase lift. The vortex generator is retracted inside the lifting surface assembly to decrease drag.

US 10, 202,187 B2 discloses a vortex generator arrangement for an aircraft including a surface section, a flap element pivotable between a first state and a second state, a biasing arrangement biasing the flap element towards the second state, retaining devices retaining the flap element in the first or second state, and a release device releasing the flap element from the first retaining device. The biasing arrangement, the first retaining device and the second retaining device are configured such that the second retaining device automatically retains the flap element in the second state after the flap element has been pivoted by the biasing arrangement from the first state into the second state. As soon as the torque exceeds a predetermined value, the second retaining device automatically releases the flap element, which pivots against the force of the biasing arrangement into the first state and is automatically retained therein by the first retaining device.

US 2013/0299643 A1 discloses a vortex generation apparatus including a vortex generator that deploys in response to deployment of a wing leading edge lift augmentation device. The vortex generator deploys into a state to generate vortices over a main wing body upper surface region trailing the vortex generator.

US 2020/0391854 A1 discloses a retractable vortex generator system for an aircraft. The system comprises a skin, a slot arranged on the skin, a plate comprising a contour configured for energizing the boundary layer of an air current, and driving means configured for rotating the plate between a first and a second position. In the first position at least part of the contour of the plate protrudes through the slot, and in the second position the plate is retracted within the slot.

US 2010/0038492 A1 discloses a retractable chine assembly includes at least one chine which is hingebly mountable to a surface such as of an aircraft having a wing. The chine is preferably configured to be movable between stowed and deployed positions. The aircraft may include an engine nacelle which may be mounted on an underside of the wing. The nacelle may generate a nacelle wake that passes over the wing upper surface at high angles of attack and induces flow separation. The chine is preferably configured such that a vortex generated thereby interacts which the nacelle wake to delay flow separation and stall.

US 6 837 465 B2 discloses a flow control device and more particularly to reactive modular flow control device with deployable flow effectors. Further disclosed is a method of operating the flow control device. One embodiment includes a method of controlling air flow across a surface of an aircraft under certain flight conditions comprising the steps of sensing fluid separation from the surface by measuring the pressure on the surface; determining a standard deviation of the pressure measurements over a period of time; and deploying a flow of effector in response to the standard deviation of the pressure measurements exceeding a predetermined threshold number.

DE 10 2015 120 958 A1 discloses an actuator module for the controllable generation of turbulence by positioning turbulence surfaces along a surface element has an elongate module base plate and a plurality of flat-shaped bending actuators. Each of the bending actuators comprises a fibre composite panel with shape memory conductors integrated into the fibre composite. The fibre composite panel is attached to the module base plate on one attachment side, and the shape memory conductors are designed in such a way that the fibre composite panel extends in the inactive state of the shape memory conductors along the surface of the module base plate and in the active state, starting from the attachment side the surface of the module base plate curves away. Furthermore, the actuator module comprises an arrangement of supply lines extending along the module base plate for electrically activating the bending actuators.

US 3 960 345 A discloses a strake, or strakes, or faired simulation of same, mounted on a typical engine nacelle or similar wing mounted body to reduce or prevent the formation of vortices usually occurring with nacelle-wing combinations to improve the lift and drag characteristics of the combination and improve the stability of the aircraft since the undesirable variations of downwash changes over the tail surfaces are reduced or eliminated.

US 10 137 979 B1 discloses A forebody flow control system and more particularly an aircraft or missile flow control system for enhanced manoeuvrability and stabilization at high angles of attack. US 10 137 979 B1 further relates to a method of operating the flow control system. In one embodiment, US 10 137 979 B1 discloses a missile or aircraft comprising an afterbody and a forebody; at least one deployable flow effector on the missile or aircraft forebody; at least one sensors each having a signal associated therewith, the at least one sensor being used for determining or estimating flow separation or side forces on the missile forebody; and a closed loop control system; wherein the closed loop control system is used for activating and deactivating the at least one deployable flow effector based on at least in part the signal of the at least one sensor.

US 7 878 457 B2 discloses a flow control device including a flow control surface over which fluid is designed to flow in a predetermined direction. Vortex generators are associated with the flow control surface. Each respective vortex generator has a pivot axis that forms an acute angle with respect to the predetermined direction and is capable of being positioned in both of an extended state, in which the respective vortex generators function to create a swirling fluid flow, and a retracted state, in which the respective vortex generators are pivoted via the pivot axis so as to lie adjacent to the flow control surface. An actuator is associated with each of the vortex generators, each actuator adapted to position the associated vortex generator between the extended and retracted states. The flow control device is disclosed to be used in tiltrotor vehicles.

It is the **object** of the present invention to at least partially overcome the problems associated with the prior art. It is a particular object of the present invention to achieve an effective and flexible manner to delay local flow separation and aerodynamic stalling of the airflow over regions of risk on the outer surfaces of a fixed-wing aircraft while maintaining smoother air flow during flight modes when flow separation is not an issue, which reduces energy consumption.

The object is achieved according to the features of the independent claims. Advantageous embodiments can be found, e.g., in the dependent claims and/or in the description.

The object is achieved by fixed-wing aircraft, at least comprising at least one vortex generator movable through an outer surface of the aircraft between a retracted state and a fully extended state by at least one electric motor, this at least one electric motor being exclusively adapted to actuate this at least one vortex generator, and comprising an electronic control unit adapted to control operation of the electric motor for direct actuation of the at least one vortex generator. The aircraft further comprises multiple vortex generators on each wing. Also, multiple propeller propulsion units are attached at each wing, sets / subgroups of at least one vortex generator each are positioned on the wings behind at least two propellers, i.e., at least one set or subgroup comprising at least one vortex generator positioned behind a first propeller and another set or subgroup comprising at least one vortex generator positioned behind a second propeller of the same wing. Furthermore, the at least one vortex generator of one set is actuatable or movable differently from the at least one vortex generator of another set, which may also be expressed in that the vortex generators of these sets are actuatable "selectively between sets".

This aircraft has the advantage that the airflow over a fixed-wing aircraft's outer surface, in particular lifting surface, can be influenced in a particularly flexible manner, thus allowing for a greater degree of flow control. When the vortex generators are actuated individually (i.e., independently from other vortex generators) and/or in groups, they can be actuated / moved to a desired deployment state (e.g., retracted, partially extended, or fully extended state, as detailed further below) specifically suited to their local position during the aircraft's current aerodynamic condition while other vortex generators at other positions can be deployed differently. This gives an effective delay of local flow separation and aerodynamic stalling at positions with vortex generators in their extended state while at other positions comprising at least partially retracted vortex generators, air can flow uninhibited thus reducing aerodynamic drag and saving energy. Energy is also saved because the vortex generators are retracted through the surface into the aircraft instead of being in a parallel, overlying relation with a flow control surface. Another advantage is that the deployment state of the vortex generators can be matched with characteristics of the individual propeller propulsion units, e.g., their throttle setting or rotation rate (RPM) which may differ between the propeller propulsion units.

The aircraft may, e.g., be a passenger aircraft and/or a cargo aircraft. The aircraft may comprise at least one fixed left wing and at least one fixed right wing. The aircraft may in particular not be a helicopter.

In its fully extended state, the at least one vortex generator is maximally extended through the aircraft's surface, thus creating the strongest swirling or turbulence within the air flow. In its retracted state, the at least one vortex generator does in particular not extend from the surface but is retracted into or behind the surface. In an embodiment, the retracted vortex generator lays flush with the surface. However, it is generally possible that the vortex generator in its retracted state extends somewhat over the surface, but less than in an extended state.

In an embodiment, the at least one vortex generator may be actuated to at least one intermediate state between the fully extended state and the retracted state, i.e., to at least one partially extended state. Such a partially extended state may be, e.g., a deployment state in which the vortex generator is extended or deployed X % of the fully extended state with X = ]0; 100[ (with X = 0 % being the fully retracted state and X = 100 % being the fully extended state). In an embodiment, the partially extended states may be steps of the fully extended state, e.g., 20 %, 40 %, 60 %, 80%. In an embodiment, the partially extended states may be controlled continuously or quasi-continuously, e.g., in steps of 1% of the fully extended state. This ability may also be expressed such that the vortex generator is differentially extendable.

The extended state may also be called a deployed state. The retracted state may also be called a stowed state.

The electric motor may be, but is not limited to, a brushless direct current electric (BLDC) motor or a stepper motor. The electric motor may be connected to an electrochemical converter (ECC) that generates electrical energy from hydrogen. The electric motor may be connected to the electrochemical converter directly or via an electric storage like a battery. The electrochemical converter may be connected to a hydrogen tank for supply of hydrogen. The electric motor may be directly linked to at least one vortex generator or may be linked via, e.g., a linkage system, a gear system, a vertical lifting device, etc. For example, the electrochemical converter may be or comprise at least one fuel cell.

The electronic control unit is adapted to control operation of an electric motor and thus the actuation of at least one vortex generator driven or actuated by this electric motor. That an electric motor is exclusively used or adapted to actuate at least one vortex generator comprises that the motor is not adapted to actuate a flow control surface of another type (i.e. not a vortex generator) such as a leading or trailing edge control surface like a flap, an aileron etc. Thus, the vortex generators may be actuated independently from an actuation or movement of a flow control surface of another type, if so desired.

It is an embodiment that at least one vortex generator of the aircraft is exclusively actuated by operation of an electric motor while at least one other vortex generator of the aircraft is actuated together with a flow control surface. It is thus possible that a subgroup of vortex generators is movable independently from an actuation of a flow control surface of another type while another subgroup of vortex generators is only movable together with an actuation or movement of a flow control surface, e.g. because the movements are mechanically coupled / linked to each other, e.g., because a subgroup of vortex generators and at least one control surface are actuated by the same electric motor or mechanically by the pilot.

It is also possible to actuate at least one vortex generator that is actuatable independently from a control surface of another type in unison with a control surface of another type, if the electronic control unit operates its electric motor accordingly. However, this coordinated movement is not compulsory but selectively chosen by the electronic control unit and may be, e.g., dependent on the operating modes or control laws.

At least one vortex generator may, e.g., be positioned on either side of a lifting surface (e.g., wings / tails), primary and secondary control surfaces (e.g., ailerons / rudders / elevators / flaps), fuselage and / or propulsion system (e.g., pod / engine fairing).

As indicated above, it is an embodiment that the aircraft comprises multiple vortex generators and at least one vortex generator out of these multiple vortex generators is individually actuatable, i.e., extendable and retractable. This advantageously enables a particularly flexible manner to actuate the vortex generators and allows for a greater degree of flow control than existing solutions in prior art. In one variant, all vortex generators are individually actuatable to have an increased control of the flow over the surface featuring these vortex generators. To be individually actuatable, a vortex generator may be associated with a respective electric motor.

It is an embodiment that the aircraft comprises multiple vortex generators and at least one set or subgroup comprising at least two vortex generators each out of these multiple vortex generators is actuatable or movable in a similar manner, e.g., as a group. In this case, the vortex generators of a group may be actuatable by a common motor. Of course, individually actuatable vortex generators may also be actuated such that they move in a synchronized or group-like manner.

The individual and/or group-wise actuation of vortex generators includes that, if not actuated, at least two the vortex generators may be in a different deployment state, e.g., retracted, partially extended (to different degrees), or fully extended. Moreover, vortex generators within the same subgroup may be extended to different deployment states using a linkage system.

It is an embodiment that the vortex generators of one wing are actuatable independently from the vortex generators of the other wing. This is particularly advantageous when the airflow conditions are different for the different wing, e.g., during a rolling manoeuvre of the aircraft and/or in the presence of shear winds.

These vortex generators on each lifting surface may be actuated individually, in particular such that at least two vortex generators of one lifting surface are actuatable independently from each other. Alternatively or additionally, the vortex generators of each lifting surface may be actuated in subgroups. These embodiments are particularly useful when the airflow over the same wing may be significantly different with respect to the position of the vortex generators. This may especially be the case when the wing is equipped with propellers / propeller propulsion units. Alternatively or additionally, all vortex generators of a wing may be actuated in a similar manner, if so desired, e.g., may all be extended or retracted at the same time.

In particular, a set of at least one vortex generator is positioned behind each of the propellers of the propeller propulsion units. This embodiment gives the advantage that these vortex generators are positioned within a propeller wash, and their deployment state thus has a particularly large effect on the air flow.

A propeller propulsion unit may comprise at least one propeller and at least one motor, in particular electric motor, to drive the at least one propeller. The propeller propulsion unit may further comprise or be connected to an electrochemical converter, ECC, that generates electric energy from hydrogen. The propeller propulsion unit may further comprise a hydrogen tank fluidically connected to at least one electrochemical converter. It is thus an embodiment that the aircraft is a hydrogen fuelled, electrically driven aircraft.

In an embodiment, at least one propeller propulsion unit comprises two propellers, e.g., one propeller in front of the wing and one propeller behind / aft the wing or two counterrotating propellers in front of the wing. In any case, each propeller propulsion unit in particular only creates one propeller wash area at the wing.

The propeller propulsion unit may in particular be mounted to a lower side of a wing.

It is an embodiment that the alignment of at least one vortex generator of at least one set of vortex generators positioned behind a propeller propulsion unit is offset (e.g., angled) with respect to the flow direction of a propeller wash generated by the propeller / propeller propulsion unit in front. This gives the advantage that such a vortex generator may redirect part of the propeller wash onto areas of the wing next to a propeller, i.e., to an area not lying in a propeller wash, e.g., to an area between two neighbouring propeller propulsion units.

It is an embodiment that at least one set comprising at least one vortex generator is positioned on the wings laterally offset / next to the propeller propulsion units and the propellers, respectively, (e.g., in an area not lying in a propeller wash) wherein the vortex generators of these sets are actuatable differently to the sets of vortex generators positioned behind the propellers. This embodiment gives the advantage that the airflow over the wing may be controlled in a particularly precise manner. In particular, the deployment of vortex generators that are positioned outside of the propeller wash can increase the turbulence / turbidity of the flow to delay the flow separation over regions without the increased dynamic pressure from the propeller wash.

In particular, the aircraft may be a distributed electric propulsion (DEP) aircraft in the sense that each wing comprises at least three electrically driven propeller propulsion units per wing, in particular at least three hydrogen fuelled, electrically driven propulsion units. The flexible (individual and/or group-wise) actuation of the vortex generators is especially useful for this case since the airflow over the wings is particularly irregular along the wing, e.g. as compared to a conventional aircraft having two or less propellers / propeller wash areas per wing.

It is an embodiment that the actuation of at least one vortex generator is dependent on a flight mode / phase or flight manoeuvre, e.g., whether the aircraft is taking off, climbing, cruising, descending, turning and/or landing.

It is an embodiment that the actuation of at least one vortex generator is dependent on the aircraft velocity. This gives the advantage that local flow separation and aerodynamic stalling of the airflow may be delayed at low speeds while excess energy consumption due to aerodynamic drag is reduced at high speeds.

It is an embodiment that the actuation of at least one vortex generator is dependent on the aircraft roll angle and/or roll velocity. For example, the vortex generators of a wing moving downwards may be actuated differently from the vortex generators of a wing moving upwards. One use case is to increase the control authority of a wingtip control surface (e.g., aileron) during a roll manoeuvre, as one wingtip experiences an increase in angle of attack while the other wingtip experiences a decrease in angle of attack depending on whether the vehicle is ascending or descending.

It is an embodiment that the actuation of at least one vortex generator is dependent on the sideslip angle of the aircraft. Sideslip is the directional angle of the aircraft and occurs when an aircraft is moving sideways as well as forward relative to the oncoming airflow. One use case is if a large sideslip angle is detected by onboard sensors, at least one vortex generator may be deployed to increase the directional (yaw) stability and delay the critical angle of directional instability. At best, past this critical angle, the workload for the pilot to control the aircraft significantly increases and at worst the pilot will lose control.

It is an embodiment that the actuation of at least one vortex generator is dependent on the angle of attack of the aircraft. Angle of attack is the angle between the oncoming airflow and a reference line through the aircraft. As the angle of attack increases, the air flow is more likely to separate from the lifting surfaces, potentially leading to stalling. One use case is that if a large angle of attack is detected by onboard sensors, at least one vortex generator may be deployed to re-energise the flow / keep it attached and delay stall.

It is an embodiment that the actuation of at least one vortex generator is dependent on the throttle setting of at least one propulsion unit, in particular a propeller rotation rate (RPM) for a propeller propulsion unit. This may include the failure of a propeller propulsion unit. One use case is to deploy at least one vortex generator to reduce the stall risk of a region over the wing that is located aft of a failed propeller propulsion unit.

It is an embodiment that the actuation of at least one vortex generator is dependent on the degree of deflection (e.g., a degree of rotation and/or extension) of a control surface, e.g., a flap, an aileron, a rudder, etc. The degree of deflection may be detected by a sensor connected to the electronic control unit or may be known from the commands to move the control surface.

It is an embodiment that the electronic control unit is connected to at least one sensor and is adapted to operate at least one electric motor for actuation of at least one vortex generator based on sensor readings of the at least one sensor. The at least one sensor may be a gyroscope, e.g., to measure the roll and yaw angles or a pitot static probe to determine the aircraft air speed etc.

It is an embodiment that the actuation of at least one vortex generator is dependent on a control command from a pilot or from the flight computer. This gives the advantage that a pilot or the flight computer may override the automatic control of the electronic control unit depending on the flight phase / maneuverer or operating mode. The pilot may have the ability to select the operating mode of the vortex generators from within the cockpit.

In an embodiment, the actuation may be governed by an actuation logic or actuation scheme in which at least some, possibly all, of the parameter are assigned a unique weight and/or hierarchy determining its influence on the actuation of at least one vortex generator, possibly on the actuation of at least one subgroup or all vortex generators.

However, actuation of the at least one of the vortex generator is not limited to or restricted by these parameters. For example, the actuation may also be dependent on their position on the aircraft surface: for example, a subgroup of vortex generators near the wingtip may have a higher sensitivity to the roll angle than a subgroup of vortex generators a near the fuselage.

The object is also achieved by a method for operating a fixed-wing aircraft wherein the vortex generators of the different sets positioned behind the at least two propellers are selectively actuated between these sets using the at least one electric motor controlled by the electronic control unit. The method may be embodied in analogy to the aircraft and gives the same advantages.

The above-described features and advantages of the invention as well as their implementation will now be schematically described in more detail by at least one embodiment in the context of one or more figures.
- Fig.1: shows a sketch of an aircraft in a top-down view according to a first embodiment;
- Fig.2: shows a cross-sectional side view of a sketch of a wing with an extended vortex generator;
- Fig.3: shows a cross-sectional side view of a sketch of the wing of Fig.2 with a retracted vortex generator;
- Fig.4: shows an oblique view of a wing section with two sets of extended vortex generators and one set of retracted vortex generators;
- Fig.5: shows a cross-sectional side view of a wing with a vortex generator extended together with a trailing edge control surface;
- Fig.6: shows a cross-sectional side view of the wing of Fig.5 with a vortex generator retracted together with the trailing edge control surface;
- Fig.7: shows a sketch of a section of an aircraft's left wing in a top-down view according to a second embodiment;
- Fig.8: shows in a top-down view a sketch of a section of an aircraft's left wing in a top-down view according to a third embodiment;
- Fig.9: shows in a top-down view a sketch of a section of an aircraft's left wing in a top-down view according to a fourth embodiment; and
- Fig. 10: shows a cross-sectional front view of a fuselage or fairing of an aircraft with an asymmetric distribution of retracted and extended vortex generators.

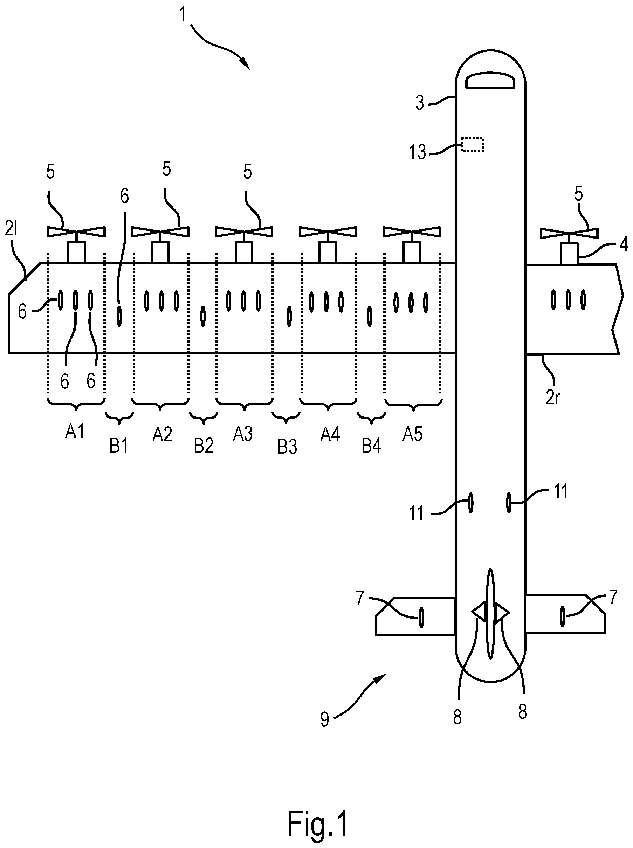

**Fig.1** shows a sketch of an aircraft 1 having a left wing 2I and a right wing 2r (partially shown) fixed to a fuselage 3. Each of the wings 2I, 2r is equipped with multiple propeller propulsion units 4 each comprising a propeller 5 on its front. Each wing 2I, 2r is further equipped with selectively extendable and retractable vortex generators 6, in particular at different positions along the wings 21, 2r (not shown for right wing 2r). In particular, the left wing 2l and the right wing 2r and in particular the vortex generators 6 and their positions may be mirror symmetric with respect to the wings 2l, 2r.

As shown by example of the left wing 2l, some of the vortex generators 6 may be positioned in areas A1 to A5 of the upper surface of the wing 2I behind respective propellers 5 thus being exposed to the respective propeller washes. Other vortex generators 6 may be positioned in areas B1 to B4 next to the propellers 5, here: in areas B1 to B4 between the propellers 5.

The aircraft 1 also comprises one or more other selectively extendable and retractable vortex generators, e.g., vortex generators on the underside of the wings 2I, 2r (not shown), vortex generators 7 and 8 at a tail 9 of the aircraft, vortex generators 11 at the fuselage 3 or a fairing, vortex generators at the propeller propulsion units 4 (not shown), etc.

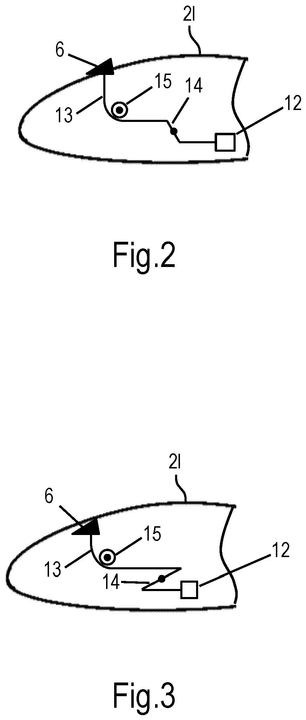

In one embodiment, all vortex generators 6 of the left wing 2I and the right wing 2r are individually movable through the upper surface of the respective wing 2I, 2r (i.e., through a respective opening) between a retracted state and a fully extended state, possibly including intermediate / partially extended states. The actuation of the vortex generators 6 is caused by operation of respective electric motors 12 (see Fig.2 and Fig.3) adapted to exclusively actuate the vortex generators 6. Operation of the electric motors 12 is controlled by an electric control unit 13 of the aircraft 1.

Alternatively, at least one set or subgroup comprising at least two vortex generators 6 is actuatable in a similar manner. For example, the sets of vortex generators 6 in each of the areas A1 to A5 may be actuated in a similar manner / group-wise, wherein the actuation may differ over different sets and areas A1 to A5, respectively. In one embodiment, the vortex generators 6 for each of the areas A1 to A5 may be actuated together by the same electric motor 12, e.g., the vortex generators 6 of area A1 by a certain common electric motor, the vortex generators 6 of area A2 by another electric motor 12, etc.

Also, vortex generators 6 of areas B1 to B4 may be actuatable in the same manner or in a different manner as compared to vortex generators 6 of areas A1 to A5 and/or as compared to vortex generators 6 of other areas B1 to B4.

In one embodiment, at least one of the vortex generators 6 of the areas A1 to A5 is angled with respect to the direction of the propeller wash, so that part of this airflow is partially redirected to an area B1 to B4.

Generally, the vortex generators 6 of one wing 2I, 2r may be actuatable independently from the vortex generators 6 of the other wing 2r, 2I so that the vortex generators 6 of area A1 of left wing 2I and the vortex generators 6 of mirror symmetric area A1 of right wing 2r may be extended in different degrees at the same time, for example, or the vortex generators 6 of area A1 of left wing 2I may be retracted while the vortex generators 6 of area A1 of right wing 2r are at least partially extended, etc.

**Fig.2** shows a cross-sectional side view of a sketch of the wing 2I with an extended vortex generator 6. The vortex generator 6 is mechanically linked to an electric motor 12 by a cable 13, in the present example via a lift enhancer in form of a lever 14 and a barrel 15, alternatively via a linkage (not shown). The extended state may be the "normal" state that the vortex generator 6 will move to without external force. This may be achieved by springs etc. (not shown). The electric motor 12 only actuates at least one vortex generator 6.

**Fig.3** shows a cross-sectional side view of a sketch of the wing 2I with a retracted vortex generator 6. To actuate the vortex generator 6 into its retracted state, the electric motor 12 moves the lever 14 which, in turn, pulls the cable 13 that, in turn, pulls the vortex generator 6 into the wing 2I. The retracted vortex generator 6 may be flush with the surrounding surface of the wing 2I or may still protrude from the surrounding surface, but less than if in a fully extended state.

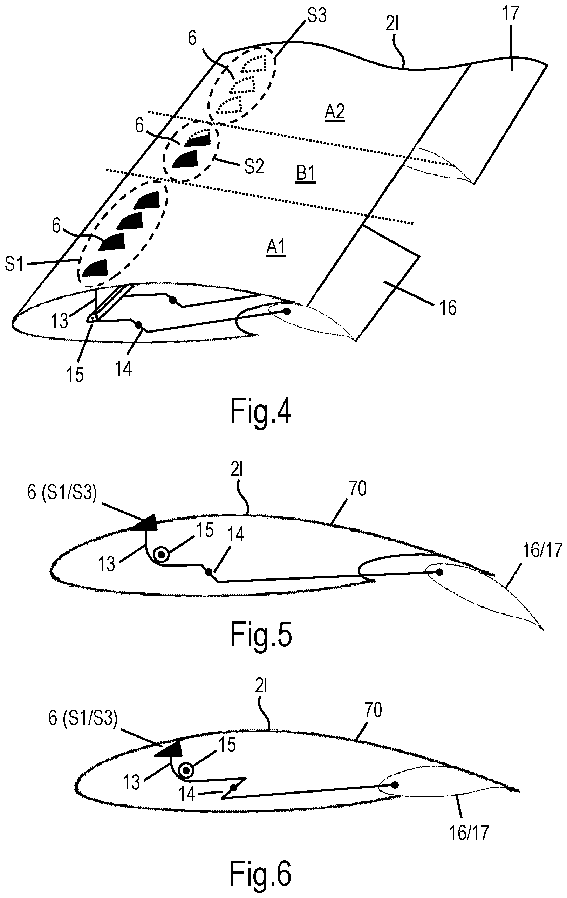

The vortex generators 6 shown in Fig.2 and Fig.3 are actuatable independently from the movement and/or positional state of other flow control surfaces 16 or 17 (see Fig.4 to Fig.6), e.g. leading and/or trailing edge control surfaces, e.g. slats, flaps, ailerons, etc.

In one exemplary embodiment, one or some (but not all) vortex generators 6 of the wings 2l, 2r are actuated together with a flow control surface: **Fig.4** shows an oblique view of a section of wing 2l with three sets of vortex generators 6, namely a first set S1 of four vortex generators 6 positioned in an area A1 behind a propeller 5, a second set S2 of two vortex generators 6 positioned in an area B1 between two propellers 5, and a third set S3 of three vortex generators 6 in an area A2 behind a propeller 5. Just as an exemplary embodiment, the vortex generators 6 of each set S1, S2, and S3, respectively, may be actuatable or movable in the same manner.

As shown, the vortex generators 6 of set S1 are mechanically linked and thus actuate together with respective trailing edge control surface (e.g., aileron) 16.

In one embodiment, the vortex generators 6 of set S3 are mechanically linked and thus actuate together with respective trailing edge control surface 17.

In another embodiment, the vortex generators 6 of set S3 are not mechanically linked with trailing edge control surface (e.g., aileron) 17, and thus do not necessarily (but may) be actuated in combination with the respective control surface 17, e.g. in the manner shown in Fig.2 and Fig.3, wherein the vortex generators 6 of sets S1 and S3 are moved by actuation of dedicated electric motors 12 dependent on the position (extension / angle of rotation) of the trailing edge control surfaces 16 and 17 as sensed or detected by at least one sensor (not shown) or based on control commands for the trailing edge control surfaces 16 and 17.

In yet another embodiment (not shown), the vortex generators 6 of sets S1 and S3 are not mechanically linked with respective trailing edge control surface 16 and 17, respectively. This gives the advantage that the vortex generators 6 of sets S1 and S3 may be movable in analogy to the mechanical linkage as shown in Fig.4 to Fig.6 but may also be actuated independently from the trailing edge control surfaces 16 and 17. In this case the vortex generators 6 of sets S1 and S3 may be actuated by different electric motors than the trailing edge control surfaces 16 and 17.

In any case, when the trailing edge control surfaces 16 and 17 are deflected through different degrees of deflection (e.g., by different angles), the vortex generators 6 of the respective sets S1 and/or S3 may also be extended to different states.

Referring back to Fig.4, the vortex generators 6 of set S2 may be independently actuatable from the trailing edge control surfaces 16 and 17 and may, e.g., be differentially extended independent of the extension of retraction of the vortex generators 6 of the sets S1 and S3 (as shown), or may also be fully extended or fully retracted, e.g., depending on the aircraft's 1 manoeuvre.

As also shown in **Fig.5****,** when the trailing edge control surfaces 16 and 17 are moved out of the wing 2I, the vortex generators 6 may be extended. This is particularly suitable for low-speed scenarios such as take-off and landing, where local flow separation and aerodynamic stall that may occur over the lifting upper surface of the wing 2I is delayed for greater angles of attack. By doing so, the stall speed of the aircraft 1 will be decreased thereby improving the low performance characteristics of the aircraft 1. This offers a simpler, lighter, and smoother leading-edge solution when compared to heavier and more complex leading edge high lift devices such as slats or slots that also introduce surface discontinuities.

During a cruising phase, the trailing edge control surfaces 16 and 17 are moved into the wing 2I, and the vortex generators 6 are retracted, as shown in **Fig.6****.** The wing surfaces will thus feature smooth low drag flow without the disturbance of deployed vortex generators 6 which would have otherwise transitioned the flow to turbulence. For the general cruise case, it is undesirable to force the transition of flow to turbulence as the aircraft 1 is not operating at high angles of attack where flow separation is an issue. Thus, energy is saved.

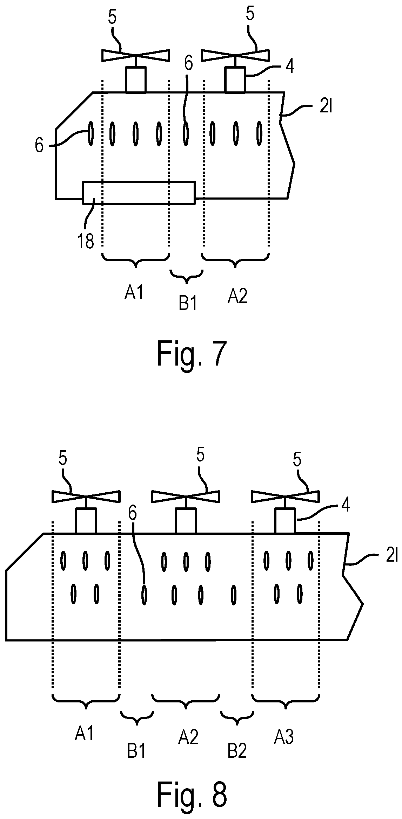

**Fig.7** shows a top-down view of a section of a left wing 2I of the aircraft 1 according to a second exemplary embodiment with areas A1, A2, and B1. In this embodiment, a control surface in form, e.g., an aileron 16 or 17 is shown. Also, one of the vortex generators 6 is shown to be positioned next to the area A1 near the wingtip.

If the control surface (e.g., aileron) 16 or 17 is deflected, the vortex generators 6 in front of it are also extended. These vortex generators 6 may be extended dependent on the deflection of the aileron 16 or 17, but not mechanically linked to the aileron 16, 17, e.g., as described in conjunction with Fig.2 and Fig.3. In an alternative not belonging to the invention, these vortex generators 6 may be mechanically linked to the aileron 16, 17, e.g., as described in conjunction with Fig.4 to Fig.6.

**Fig.8** shows a top-down view of a section of a left wing 2I of the aircraft 1 according to a third embodiment with areas A1 to A3, and B1 to B2. In this embodiment, there are two rows of vortex generators 6 positioned behind each other at least in the areas A1 to A3.

In this scenario, the propeller 5 or propeller propulsion unit 4 associated with area A2 has failed. Thus, the vortex generators 6 of area A2, and possibly also the vortex generators 6 of areas B1 and/or B2 are extended to control the air flow in this area(s) in order to delay the onset of flow separation. The other vortex generators 6, e.g., of areas A1 and A3, remain in their deployment state, e.g. a retracted state.

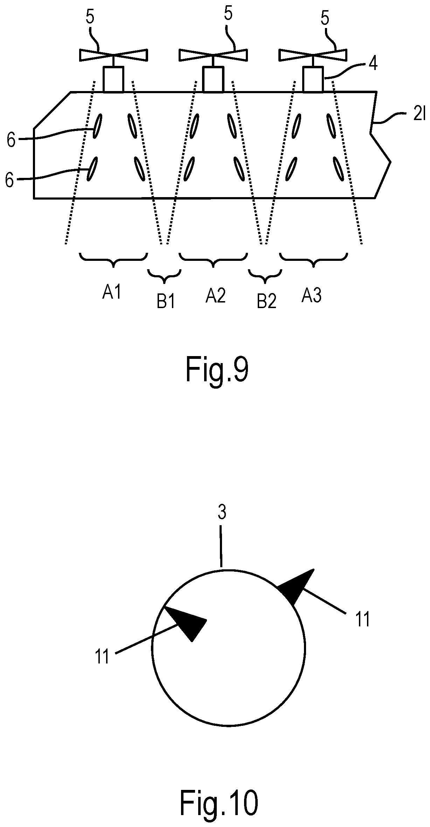

**Fig.9** shows a top-down view of a section of the aircraft's left wing 2I of the aircraft 1 according to a fourth embodiment. At least the shown vortex generators 6 of areas A1 to A3 are angled with respect to the axial direction of the propeller wash. When extended, they widen the propeller wash which then covers an increased area of the wing 2l. This advantageously minimizes the risk of stall in the area that would otherwise not experience any propeller wash.

Different actuation of the vortex generators is not limited to vortex generators 6, 7 positioned at lifting surfaces, such as the wings 2I, 2r or horizontal elevators of the tail 9, but can also, e.g., be applied to vortex generators 11 at surfaces of the fuselage 3 or fairing, as shown in **Fig.10** with a retracted vortex generator 11 on the left side and an extended vortex generator 11 on the right side. The same applies to vortex generators 8.

The actuation of at least one of the vortex generators 6, 7, 8 and/or 11 may be dependent on at least one of the parameters out of the following group of parameters:
- a flight mode / phase and/or maneuverer of the aircraft 1;
- an air speed of the aircraft 1;
- a roll angle of the aircraft 1;
- a sideslip angle of the aircraft 1;
- an angle of attack of the aircraft 1;
- a throttle setting and/or a rotation rate of at least one propeller propulsion unit 4;
- a degree of deflection of a control surface 16, 17;
- a control command from a pilot or flight computer,
but are not limited to or restricted by these parameters. In an embodiment, the actuation may be governed by a logic or scheme in which at least some, possibly all, of the parameter, and possibly other factors of influence like a position of a vortex generator on the aircraft, are assigned a unique weight and/or hierarchy determining its influence on the actuation of at least one vortex generator, possibly on the actuation of at least one subgroup or all vortex generators.

Of course, the invention is not restricted to the described embodiments.

For example, the number, positional arrangement, and orientation of the vortex generators is generally not limited. Particularly, any of the vortex generators 6 shown in the above figures may be present on the same wing 2I, 2r. For example, any of the areas A1 to A5 and/or B1 to B4 may comprise one or more rows of vortex generators 6 with none, one or more of the vortex generators 6 being angled with respect to the direction of the propeller wash. If there are angled vortex generators 6, they may be actuated independently from non-angled vortex generators 6, and vice-versa, etc.

### List of Reference Signs

- 1: Aircraft
- 2I: Left wing
- 2r: Right wing
- 3: Fuselage
- 4: Propeller propulsion unit
- 5: Propeller
- 6: Vortex generator
- 7: Vortex generator
- 8: Vortex generator
- 9: Tail
- 11: Vortex generator
- 12: Electric motor
- 13: Cable
- 14: Lever
- 15: Barrel
- 16: Trailing edge control surface
- 17: Trailing edge control surface
- A1-A5: Areas of the upper surface of the wing behind respective propellers
- B1-B4: Areas of the upper surface of the wing between the propellers

## Claims

1. A fixed-wing aircraft (1), at least comprising
- multiple propeller propulsion units (4) attached at each wing (2l, 2r),
- multiple vortex generators (6) on each wing (2I, 2r) movable through an outer surface of the aircraft (1) between a retracted state and a fully extended state by electric motors (12) which are exclusively adapted to actuate the vortex generators (6, 7, 8, 11),and comprising
- an electronic control unit (13) adapted to control operation of the electric motors (12) for actuation of the vortex generators (6, 7, 8, 11),
wherein
- of these vortex generators (6), sets of at least one vortex generator (6) each are positioned on the wings (2I, 2r) behind at least two propellers (5), and
- the at least one vortex generator (6) of one set is actuatable differently from the at least one vortex generator (6) of another set.

2. The aircraft (1) according to claim 1, wherein
- at least one of the sets of vortex generators (6, 7, 8, 11) comprises at least two vortex generators (6, 7, 8, 11) and
- the vortex generators (6, 7, 8, 11) of this set are actuatable in a similar manner.

3. The aircraft (1) according to any of the preceding claims, wherein the vortex generators (6) of one wing (2l, 2r) are actuatable independently from the vortex generators (6) of the other wing (2r, 2l).

4. The aircraft (1) according to any of the preceding claims, wherein at least two vortex generators (6) of one wing (2l, 2r) are actuatable independently from each other.

5. The aircraft (1) according to any of the preceding claims, wherein an alignment of at least one vortex generator (6) of the at least on set of vortex generators (6) positioned behind a propeller (5) is angled with respect to a flow direction of a propeller wash generated by the propeller (5) in front.

6. The aircraft (1) according to any of the preceding claims, comprising at least one set of at least one vortex generator (6) each positioned on the wings (2I, 2r) laterally offset to the propellers (5), wherein the vortex generators (6) of these sets are actuatable differently to the vortex generators (6) of sets positioned behind the propellers (5).

7. The aircraft (1) according to any of the preceding claims, comprising at least three propeller propulsion units (4) per wing (2r, 2l).

8. The aircraft (1) according to any of the preceding claims, wherein the actuation of at least one vortex generator (6, 7, 8, 11) is dependent on at least one of the parameters out of the following group of parameters:
- a flight mode and/or a manoeuvre of the aircraft (1);
- a velocity of the aircraft (1);
- a roll angle and/or roll rate of the aircraft (1);
- a sideslip angle of the aircraft (1);
- an angle of attack of the aircraft (1);
- a degree of deflection of a control surface (16, 17);
- a control command from a pilot or a flight computer.

9. The aircraft (1) according to any of the preceding claims, wherein the actuation of at least one vortex generator (6, 7, 8, 11) is dependent on a throttle setting and/or a propeller rotation rate of at least one propulsion unit (4).

10. A method for operating a fixed-wing aircraft (1) according to any of the preceding claims, wherein the vortex generators (6) of the different sets positioned behind the at least two propellers are selectively actuated between these sets using the electric motors (12) controlled by the electronic control unit (13).

## Patentansprüche

1. Starrflügelflugzeug (1), mindestens aufweisend:
- mehrere Propellerantriebseinheiten (4), die an jedem Flügel (21, 2r) angebracht sind,
- mehrere Wirbelgeneratoren (6) an jedem Flügel (21, 2r), die durch eine Außenfläche des Flugzeugs (1) zwischen einem eingefahrenen Zustand und einem vollständig ausgefahrenen Zustand durch Elektromotoren (12) bewegbar sind, die ausschließlich dazu eingerichtet sind, die Wirbelgeneratoren (6, 7, 8, 11) zu betätigen, und umfassend
- ein elektronisches Steuergerät (13), das zum Steuern eines Betriebs des mindestens einen Elektromotors (12) zur Betätigung der Wirbelgeneratoren (6, 7, 8, 11) eingerichtet ist,
wobei
- von diesen Wirbelgeneratoren (6) Sätze von jeweils mindestens einem Wirbelgenerator (6) auf den Flügeln (21, 2r) hinter mindestens zwei Propellern (5) positioniert sind, und
- der mindestens eine Wirbelgenerator (6) eines Satzes anders als der mindestens eine Wirbelgenerator (6) eines anderen Satzes betätigbar ist.

2. Flugzeug (1) nach Anspruch 1, wobei
- mindestens einer der Sätze von Wirbelgeneratoren (6, 7, 8, 11) mindestens zwei Wirbelgeneratoren (6, 7, 8, 11) umfasst und
- die Wirbelgeneratoren (6, 7, 8, 11) dieses Satzes auf die gleiche Weise betätigbar sind.

3. Flugzeug (1) nach einem der vorhergehenden Ansprüche, wobei die Wirbelgeneratoren (6) eines Flügels (21, 2r) unabhängig von den Wirbelgeneratoren (6) des anderen Flügels (2r, 21) betätigbar sind.

4. Flugzeug (1) nach einem der vorhergehenden Ansprüche, wobei mindestens zwei Wirbelgeneratoren (6) eines Flügels (21, 2r) unabhängig voneinander betätigbar sind.

5. Flugzeug (1) nach einem der vorhergehenden Ansprüche, wobei eine Ausrichtung mindestens eines Wirbelgenerators (6) des mindestens einen Satzes von Wirbelgeneratoren (6), der hinter einem Propeller (5) positioniert ist, in Bezug auf eine Strömungsrichtung eines durch den Propeller (5) davor erzeugten Propellerstroms angewinkelt ist.

6. Flugzeug (1) nach einem der vorhergehenden Ansprüche, umfassend mindestens einen Satz mit jeweils mindestens einem Wirbelgenerator (6), die seitlich versetzt zu den Propellern (5) an den Flügeln (21, 2r) positioniert sind, wobei die Wirbelgeneratoren (6) dieser Sätze anders als die Wirbelgeneratoren (6) von hinter den Propellern (5) positionierten Sätzen betätigbar sind.

7. Flugzeug (1) nach einem der vorhergehenden Ansprüche, umfassend mindestens drei Propellerantriebseinheiten (4) pro Flügel (2r, 21).

8. Flugzeug (1) nach einem der vorhergehenden Ansprüche, wobei die Betätigung mindestens eines Wirbelgenerators (6, 7, 8, 11) von mindestens einem der Parameter aus der folgenden Gruppe von Parametern abhängig ist:
- Flugmodus und/oder Flugmanöver des Flugzeugs (1) ;
- Geschwindigkeit des Flugzeugs (1);
- Rollwinkel und/oder Rollgeschwindigkeit des Flugzeugs (1);
- Schiebewinkel des Flugzeugs (1);
- Anstellwinkel des Flugzeugs (1);
- Grad der Auslenkung einer Steuerfläche (16, 17);
- Steuerbefehl von einem Piloten oder einem Flugrechner.

9. Flugzeug (1) nach einem der vorhergehenden Ansprüche, wobei die Betätigung mindestens eines Wirbelgenerators (6, 7, 8, 11) von einer Drosseleinstellung und/oder einer Propellerdrehzahl der mindestens einen Antriebseinheit (4) abhängig ist.

10. Verfahren zum Betreiben eines Starrflügelflugzeugs (1) nach einem der vorhergehenden Ansprüche, wobei die Wirbelgeneratoren (6) der verschiedenen Sätze, die hinter den mindestens zwei Propellern positioniert sind, selektiv zwischen diesen Sätzen unter Verwendung der Elektromotoren (12) betätigt werden, die durch das elektronische Steuergerät (13) gesteuert werden.

## Revendications

1. Aéronef (1) à voilure fixe, comprenant au moins
- une pluralité d'unités de propulsion (4) à hélice fixées au niveau de chaque aile (21, 2r),
- une pluralité de générateurs de vortex (6) sur chaque aile (21, 2r) mobiles au travers d'une surface extérieure de l'aéronef (1) entre un état escamoté et un état entièrement déployé grâce à des moteurs électriques (12) qui sont exclusivement adaptés à actionner les générateurs de vortex (6, 7, 8, 11), et comprenant
- une unité de commande électronique (13) adaptée à commander le fonctionnement des moteurs électriques (12) pour l'actionnement des générateurs de vortex (6, 7, 8, 11),
- parmi ces générateurs de vortex (6), des ensembles d'au moins un générateur de vortex (6) étant chacun positionnés sur les ailes (21, 2r) derrière au moins deux hélices (5), et
- l'au moins un générateur de vortex (6) d'un ensemble étant actionnable différemment de l'au moins un générateur de vortex (6) d'un autre ensemble.

2. Aéronef (1) selon la revendication 1,
- au moins un des ensembles de générateurs de vortex (6, 7, 8, 11) comprenant au moins deux générateurs de vortex (6, 7, 8, 11), et
- les générateurs de vortex (6, 7, 8, 11) de cet ensemble étant actionnables d'une manière similaire.

3. Aéronef (1) selon l'une quelconque des revendications précédentes, les générateurs de vortex (6) d'une aile (21, 2r) étant actionnables indépendamment des générateurs de vortex (6) de l'autre aile (2r, 21).

4. Aéronef (1) selon l'une quelconque des revendications précédentes, au moins deux générateurs de vortex (6) d'une aile (21, 2r) étant actionnables indépendamment l'un de l'autre.

5. Aéronef (1) selon l'une quelconque des revendications précédentes, un alignement d'au moins un générateur de vortex (6) de l'au moins un ensemble de générateurs de vortex (6) positionné derrière une hélice (5) formant un angle avec une direction d'écoulement d'un souffle d'hélice généré par l'hélice (5) située devant.

6. Aéronef (1) selon l'une quelconque des revendications précédentes, comprenant au moins un ensemble d'au moins un générateur de vortex (6) positionné chacun sur les ailes (21, 2r) en décalage latéral par rapport aux hélices (5), les générateurs de vortex (6) de ces ensembles étant actionnables différemment des générateurs de vortex (6) d'ensembles positionnés derrière les hélices (5).

7. Aéronef (1) selon l'une quelconque des revendications précédentes, comprenant au moins trois unités de propulsion (4) à hélice par aile (2r, 21).

8. Aéronef (1) selon l'une quelconque des revendications précédentes, l'actionnement d'au moins un générateur de vortex (6, 7, 8, 11) étant fonction d'au moins un des paramètres dans le groupe de paramètres suivant :
- un mode de vol et/ou une manoeuvre de l'aéronef (1) ;
- une vitesse de l'aéronef (1) ;
- un angle de roulis et/ou un taux de roulis de l'aéronef (1) ;
- un angle de dérapage de l'aéronef (1) ;
- un angle d'attaque de l'aéronef (1) ;
- un degré de braquage d'une gouverne (16, 17) ;
- une consigne de commande émanant d'un pilote ou d'un calculateur de vol.

9. Aéronef (1) selon l'une quelconque des revendications précédentes, l'actionnement d'au moins un générateur de vortex (6, 7, 8, 11) étant fonction d'un réglage des gaz et/ou d'une vitesse de rotation d'hélice d'au moins une unité de propulsion (4).

10. Procédé pour faire fonctionner un aéronef (1) à voilure fixe selon l'une quelconque des revendications précédentes, les générateurs de vortex (6) des différents ensembles positionnés derrière les au moins deux hélices étant actionnés sélectivement entre ces ensembles au moyen des moteurs électriques (12) commandés par l'unité de commande électronique (13).
